# EUROPÄISCHE PATENTSCHRIFT

(11) **EP 0 691 244 B1**
(45) Veröffentlichungstag und Bekanntmachung des Hinweises auf die Patenterteilung: **08.03.2000**
(21) Anmeldenummer: 95110269.8
(22) Anmeldetag: 01.07.1995
(51) Int. Cl.: B60R 21/00

(54) **Prüfverfahren für eine passive Sicherheitseinrichtung in Kraftfahrzeugen**
Test method for a passive safety device in motor vehicles
Méthode de test pour un dispositif de sécurité dans des véhicules automobiles

(30) Priorität: 08.07.1994 DE 4424020
(43) Veröffentlichungstag der Anmeldung: 10.01.1996
(73) Patentinhaber: TEMIC TELEFUNKEN microelectronic GmbH, 74072 Heilbronn (DE)
(72) Erfinder: Spies, Hans, D-85276 Pfaffenhofen (DE); Fendt, Günter, D-86529 Schrobenhausen (DE); Hora, Peter, D-86529 Schrobenhausen (DE)
(74) Vertreter: Maute, Hans-Jürgen, Dipl.-Ing.

(56) Entgegenhaltungen:
- EP-A- 0 011 680
- EP-A- 0 343 579
- EP-A- 0 518 501
- WO-A-88/04074
- DE-A- 4 218 645
- DE-A- 4 321 589
- US-A- 5 155 376

## Beschreibung

Die Erfindung betrifft ein Prüfverfahren für eine passive Sicherheitseinrichtung in Kraftfahrzeugen gemäß dem Oberbegriff des Patentanspruches 1 sowie eine geeignete Schaltungsanordnung zur Durchführung des Verfahrens. Ein solches Prüfverfahren sowie eine Schaltungsanordnung dazu sind der DE 42 18 645 A1 zu entnehmen, die eine Vorrichtung zum Schutz von Fahrzeuginsassen lehrt, bei der die Signalaufbereitungsschaltung mittels eines Prüfimpulses getestet wird.

Die DE 42 18 645 A1 weist dabei den entscheidenden Nachteil auf, daß dieser Prüfimpuls einem Aufprallsimulationssignal mit Auslösestärke entspricht, also zwar das Erkennen eines auslösefalls geprüft werden kann,jedoch nicht sichergestellt werden kann, daß die Sicherheitseinrichtungen nicht immer oder nicht schon bei geringen Signalstärken, beispielsweise Erschütterungen, ausgelöst werden.

Die an Insassenschutzeinrichtungen für Kraftfahrzeuge gestellten Anforderungen während der gesamten Betriebsdauer des Kraftfahrzeuges sind sehr hoch. Zur Erfüllung dieser hohen Anforderungen sind Konzepte vorgeschlagen worden, die neben der der Sicherheitseinrichtung zugeordneten Steuereinheit eine weitere Steuereinheit, in der Regel ein Mikroprozessor zur Überwachung der der .Sicherheitseinrichtung zugeordneten Steuereinheit vorsieht. Eine solche Konzeption mit einem Überwachungsrechner verursacht einerseits eine Erhöhung der Sicherheit und Zuverlässigkeit der Sicherheitseinrichtung, andererseits jedoch eine sehr ins Gewicht fallende Erhöhung der Kosten für eine solche Sicherheitseinrichtung.

Der vorliegenden Erfindung liegt daher die Aufgabe zugrunde, ein Prüfverfahren für eine passive Sicherheitseinrichtung in Kraftfahrzeugen weiterzubilden, das kostengünstig realisierbar ist und dennoch eine verbesserte Funktionsprüfung ermöglicht. Außerdem soll eine Schaltungsanordnung zur Durchführung des Verfahrens angegeben werden.

Diese Aufgabe wird durch die kennzeichnenden Merkmale des Patentanspruches 1 sowie durch Anspruch 7 für die Schaltungsanordnung gelöst. Hiernach wird das erfindungsgemäße Prüfverfahren, das eine Eigendiagnose darstellt, für eine passive Sicherheitseinrichtung in Kraftfahrzeugen mittels einer Überwachungseinheit durchgeführt, die nach dem Einschalten der Sicherheitseinrichtung Prüfimpulse erzeugt. Diese Prüfimpulse werden der Aufbereitungsschaltung des Sensors zugeführt, die ihrerseits die aufbereiteten Signale an die Steuereinheit, die als Auslöserechner arbeitet, weiterleitet, die nun diese Signale hinsichtlich der Wahrheitskriterien für die Sicherheitseinrichtung bewertet und dieses Bewertungsergebnis wieder der Überwachungseinheit anzeigt. In Abhängigkeit dieses Bewertungsergebnisses, ob also die von der Steuereinheit vorgenommene Bewertung richtig oder falsch war, erfolgt nun eine Freigabe oder eine Sperrung der Zündendstufe. Bei diesem erfindungsgemäßen Prüfverfahren durchlaufen die Schaltungskomponenten der Sicherheitseinrichtung, also die Aufbereitungsschaltung des Sensors sowie die Steuereinheit eine Prüfphase, so daß sichergestellt ist, daß die Freigabe der Zündendstufe nur möglich ist, wenn die Aufbereitungsschaltung des Sensors als auch die Steuereinheit voll funktionsfähig ist. Dadurch, daß das erfindungsgemäße Prüfverfahren auf einen Überwachungs-Mikroprozessor verzichtet, kann es äußerst kostengünstig realisiert werden, wobei es trotzdem hinsichtlich Funktionalität und Prüfsicherheit der eines unabhängigen Überwachungs-Mikroprozessors entspricht.

Entscheidend ist dabei, daß eine Folge wenigstens zwei voneinander abweichender Prüfimpulse verwendet wird, die von der Überwachungseinheit sequentiell der Aufbereitungsschaltung des Sensors zugeführt wird, was zu einem weiteren vereinfachten Schaltungsaufbau führt.

Eine Verbesserung der Prüfqualität wird bei einer anderen Ausführungsform der Erfindung dadurch erzielt, daß für die Reihenfolge der Prüfimpulse eine zufällige Reihenfolge durch die Überwachungseinheit erzeugt wird.

Zur Durchführung des Prüfverfahrens erzeugt die Steuereinheit nach dem Einschalten der Sicherheitseinrichtung ein Startsignal, das der Überwachungseinheit zugeführt wird, wodurch diese zur Master-Einheit und die Steuereinheit zur Slave-Einheit wird und die Überwachungseinheit zur Erzeugung der Prüfimpulse sowie zur Auswertung des von der Steuereinheit erzeugten Bewertungsergebnisses veranlaßt wird.

Weiterhin wird bei einer vorteilhaften Ausführungsform der Erfindung von der Überwachungseinheit wenigstens drei voneinander unterschiedliche Prüfungsimpulse erzeugt. Vorzugsweise kann dabei ein Prüfimpuls als Auslöseimpuls ausgebildet sein, der eine vom Sensor detektierte und zur Auslösung der Sicherheitseinrichtung führende Kollision simuliert. Ein weiterer Prüfimpuls kann derart ausgebildet sein, daß er eine vom Sensor detektierte, aber nicht zur Auslösung der Sicherheitseinrichtung führende Kollision simuliert. Schließlich kann das Nichtvorliegen eines Impulses als dritter Prüfimpuls definiert werden.

Schließlich kann das erfindungsgemäße Prüfverfahren mit einer einfachen Schaltungsanordnung realisiert werden, die lediglich eine Auswertelogik und einen zur Erzeugung der Prüfimpulse erforderlichen Zufallsgenerator umfaßt. Diese Schaltungsanordnung kann mit Vorteil auf der die Elektronikkomponenten tragenden Leiterplatte der Sicherheitseinrichtung integriert werden, die zusätzlich weitere Schaltungskomponenten der Sicherheitseinrichtung trägt.

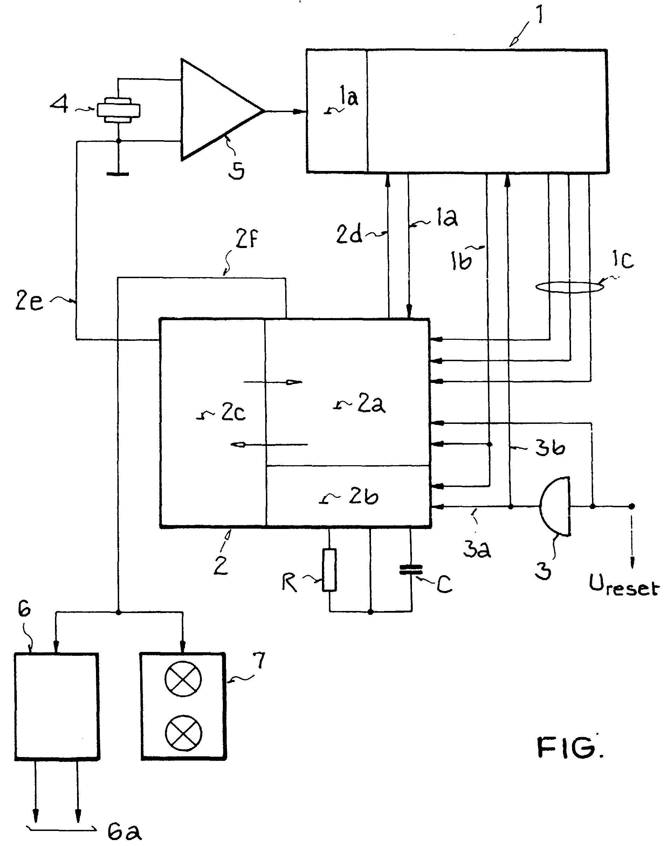

Im folgenden soll das erfindungsgemäße Prüfverfahren anhand eines Ausführungsbeispieles im Zusammenhang mit einem Blockschaltbild gemäß der Figur beschrieben und erläutert werden.

Die Figur zeigt eine Auslöseschaltung für eine Insassenschutzeinrichtung in Kraftfahrzeugen mit einer Steuereinheit 1, in der Regel ein Mikroprozessor, einer Überwachungseinheit 2, einer Signalaufbereitungsschaltung 5, der ein Sensor 4, beispielsweise ein Beschleunigungssensor vorgeschaltet ist, sowie eine Endstufenverriegelung 6 und eine Fehleranzeige 7. Die zu dieser Auslöseschaltung gehörende Zündendstufe zur Auslösung wenigstens eines elektrisch betätigbaren Auslösemittels, beispielsweise einer Zündpille, für ein Rückhaltemittel der Sicherheitseinrichtung ist nicht dargestellt. Als Rückhaltemittel kann beispielsweise ein Airbag, Gurtstraffer oder ein Überrollbügel angesehen werden, wobei im letztgenannten Fall der Sensor 4 einen Überrollsensor darstellt. Schließlich kann im Falle eines Side-Airbags anstelle des Beschleunigungssensors 4 ein Berührungssensor eingesetzt werden.

In der Überwachungsschaltung gemäß der Figur werden die von dem Sensor 4 erzeugten Signale der Signalaufbereitungsschaltung 5 zugeführt, die in der Regel Verstärker und Filter umfaßt und im Beschleunigungsaufnehmergehäuse integriert sein können. Diese analogen Ausgangssignale der Signalaufbereitungsschaltung 5 werden vor einer Bewertung durch die Steuereinheit 1 einem A/D-Wandler 1a zugeführt. Die von diesem A/D-Wandler erzeugten digitalen Daten werden nun einem in der Steuereinheit 1 abgelegten Algorithmus hinsichtlich der Auslösekriterien für die Sicherheitseinrichtung unterworfen. Am Ende dieser Bewertung steht das Ergebnis, ob ein Aufprall des Kraftfahrzeuges vorliegt, der die Auslösung oder Nichtauslösung der Rückhaltemittel der Sicherheitseinrichtung erforderlich macht. Um diesen von der Signalaufbereitungsschaltung 5 als auch der Steuereinheit 1 durchgeführten Betriebsablauf hinsichtlich deren Funktion zu überprüfen, dient die nun im folgenden zu beschreibende Überwachungsschaltung 2.

Diese Überwachungsschaltung 2 umfaßt eine Auswertelogik 2a, eine Schaltung 2c, die Prüfimpulse erzeugt als auch einen Zufallsgenerator umfaßt und schließlich eine Fenster-Watch-Dog-Schaltung 2b, deren Funktion weiter unten erklärt werden soll. Beim Einschalten der Auslöseschaltung, wenn also das Fahrzeug gestartet wird, wird ein Reset-Signal Uᵣₑₛₑₜ von einem Netzteil oder einer Reset-Logik erzeugt und der Auswerteschaltung 2a bzw. über ein NAND-Gatter 3 der Steuereinheit 1 als auch der Fenster-Watch-Dog-Schaltung 2b zugeführt. Dies führt zu einer Erzeugung eines Start-Signals durch die Steuereinheit 1, das über eine Leitung 1a an die Auswerteschaltung 2a mit der Folge gesendet wird, daß die Schaltung 2c der Überwachungseinheit 2 Prüfimpulse mit einer zufälligen Reihenfolge erzeugt und sequentiell der Signalaufbereitungsschaltung 5 zuführt, nämlich dort, wo auch die Ausgangssignale des Sensors 4 anliegen. Diese Prüfimpulse simulieren Ausgangssignale des Sensors 4, die bestimmte Betriebszustände des Fahrzeuges darstellen. Anhand diesen simulierten Ausgangssignalen sollen die Signalaufbereitungsschaltung 5 als auch die Steuereinheit 1 ihre Funktionsfähigkeit zeigen. Das von dieser Steuereinheit 1 erzeugte Bewertungsergebnis wird statisch über drei Leitungen 1c der Auswerteschaltung 2a der Überwachungseinheit 2 zugeführt. Anstatt einer statischen Übermittlung kann das Bewertungsergebnis auch seriell über eine einzige Leitung an die Überwachungseinheit 2 weitergeleitet werden. Die Auswertelogik 2a der Überwachungseinheit 2 führt nun eine Überprüfung dieser Bewertungsergebnisse vor, indem sie diese mit den von der Schaltung 2c erzeugten Prüfimpulse vergleicht und entscheidet, ob diese Prüfimpulse durch die Signalaufbereitungsschaltung 5 und die Steuereinheit 1 richtig bearbeitet wurden. Bei positivem Überprüfungsergebnis durch die Auswertelogik 2a wird über eine Leitung 2f die Endstufenverriegelung 6 freigegeben, so daß nun das Auslösemittel, beispielsweise eine Zündpille der Sicherheitseinrichtung auslösbar ist. Im anderen Fall, wenn ein negatives Überprüfungsergebnis vorliegt, wird die Zündendstufe über die Leitungen 6a der Endstufenverriegelung 6 gesperrt bzw. nicht freigegeben. Außerdem wird dieses negative Ergebnis durch eine Fehleranzeige 7 angezeigt. Schließlich wird das Ergebnis dieser Überprüfung von der Auswerteschaltung 2a über eine Leitung 2d der Steuereinheit 1 übermittelt.

Im vorliegenden Fall werden als Prüfimpulse drei verschiedene Impulse mittels des Zufallsgenerators der Schaltung 2c erzeugt, nämlich ein Auslöseimpuls mit einer Impulsdauer von beispielsweise 10 ms, einem Nichtauslöseimpuls von beispielsweise 1 ms und einem Impuls mit einer Impulsdauer von 0 ms. Diese von der Signalaufbereitungsschaltung 5 und der Steuereinheit 1 bewerteten Impulse werden von der Auswerteschaltung 2a, insbesondere bzgl. der zeitlichen Reihenfolge der Prüfimpulse, überwacht. Die Anzahl von Prüfimpulsen ist nicht auf drei beschränkt, sondern kann auch eine größere Anzahl sein, die insbesondere auch von der Art des Sensors und des die Prüfimpulse bewertenden Algorithmus, der in der Steuereinheit 1 abgelegt ist, abhängt.

Durch dieses Prüfverfahren, das eine Eigendiagnose darstellt, ist sichergestellt, daß die Endstufenverriegelung nur freigeschaltet werden kann, wenn auch die Steuereinheit 1 voll funktionsfähig ist, da während dieser Prüfphase die Auswerteschaltung 2a der Überwachungseinheit 2 die Master-Funktion übernimmt und die Steuereinheit 1 zur Slave-Einheit erklärt wird.

Von Vorteil ist bei dem beschriebenen Prüfverfahren außerdem, daß automatisch der A/D-Wandler 1a und der in der Steuereinheit 1 abgelegte Auslösealgorithmus in die Prüfung miteinbezogen werden kann.

Die oben beschriebene Prüfphase wird nur einmalig beim Einschalten der Sicherheitseinrichtung durchgeführt, wogegen mit der Fenster-Watch-Dog-Schaltung 2b eine zyklische Prüfung in Abständen von ca. 1 ms durchgeführt wird. Während dieser Prüfphasen erhält dieser Watch-Dog 2b ständig im Abstand von 1 ms über eine Leitung 1b ein "Beruhigungssignal". Das der Watch-Dog-Schaltung 2b zugeordnete RC-Glied dient als Zeitbasis für diese Schaltung. Anstelle des RC-Gliedes kann auch ein Resonator bzw. eine Quarzzeitbasis verwendet werden.

Durch das beschriebene Prüfverfahren wird eine ebenso hohe Prüfsicherheit wie durch einen unabhängigen Überwachungs-Prozessor erreicht, wobei der Fenster-Watch-Dog als Ergänzung zur Durchführung der zyklischen Prüfungen erforderlich ist.

Schließlich kann die erfindungsgemäße Überwachungseinheit zusammen mit den anderen Schaltungskomponenten der Sicherheitseinrichtung als ASIC (Application Specific Integrated Circuit) auf einer Elektronikplatine realisiert werden. Diese zusätzlichen Schaltungskomponenten können beispielsweise Zündendstufen bzw. Leistungsendstufen, ein Netzteil, Auf- und Abwärtsregler, eine Referenzspannungserzeugung, eine Fehlerlampenansteuerung, eine Sitzbelegungserkennung, eine Prüfstromerzeugung zur Zündpillenüberwachung, einen Crash-Ausgang, eine Kommunikations-Schnittstelle, eine Spannungsüberwachung, eine Ladeschaltung für Zündkondensatoren usw. umfassen. Dabei entfällt auf die Überwachungseinheit ca. 3 bis 5 % der ASIC-Fläche.

Die Erfindung ist nicht darauf beschränkt, lediglich wie in dem Ausführungsbeispiel gemäß der Figur Prüfimpulse ausschließlich für einen einzigen Sensor zu erzeugen, sondern es ist auch möglich, daß die Schaltung 2c der Überwachungseinheit 2 für weitere Sensoren Prüfimpulse erzeugt werden, die über weitere Leitungen diesen zugeführt wird.

## Patentansprüche

1. Prüfverfahren für eine passive Sicherheitseinrichtung in Kraftfahrzeugen, bestehend aus
a) wenigstens einem Kollisionssensor (4), der an eine Signalaufbereitungsschaltung (5) angeschlossen ist,
b) einer Zündendstufe zur Auslösung wenigstens eines elektrisch betätigbaren Auslösemittels für ein Rückhaltemittel der Sicherheitseinrichtung
c) einer Steuereinheit (1), die eine Auswertung der von der Signalaufbereitungsschaltung (5) erzeugten Signale hinsichtlich der Auslösekriterien für die Sicherheitseinrichtung vornimmt,
d) einer Überwachungseinheit (2), die nach dem Einschalten der Sicherheitseinrichtung einen Prüfimpuls erzeugt, wobei
e) der Prüfimpuls der Signalaufbereitungsschaltung (5) des Sensors (4) zugeführt wird,
f) die Steuereinheit (1) aufgrund des Prüfimpulses ein Bewertungsergebnis erzeugt, das der Überwachungseinheit (2) zugeführt wird und
g) durch die Überwachungseinheit (2) ein Vergleich des Bewertungsergebnisses mit dem erzeugten Prüfimpuls erfolgt und bei Abweichungen ein Fehler erkannt wird,
**gekennzeichnet durch folgende Merkmale:**
k1) die Überwachungseinheit (2) erzeugt eine Folge von wenigstens zwei voneinander abweichenden Prüfimpulsen,
k2) die von der Überwachungseinheit (2) erzeugte Folge von Prüfimpulsen wird sequentiell der Signalaufbereitungsschaltung (5) des Sensors (4) zugeführt und eine aus der Folge von Prüfimpulsen abgeleitete Folge von Bewertungsergebnissen von der Steuereinheit (1) an die Überwachungseinheit (2) gesandt,
k3) die Überwachungseinheit (2) die Folge von Bewertungsergebnissen mit der Folge von erzeugten Prüfimpulsen vergleicht und in Abhängigkeit vom Vergleichsergebnis eine Freigabe oder eine Sperrung der Zündendstufe erfolgt.

2. Prüfverfahren nach Anspruch 1, dadurch gekennzeichnet, daß für die Reihenfolge der einzelnen Prüfimpulse innerhalb der Folge zufällig erzeugt wird.

3. Prüfverfahren nach Anspruch 1, dadurch gekennzeichnet, daß wenigstens ein Prüfimpuls als Auslöseimpuls ausgebildet ist, der eine vom Sensor (4) detektierte und zur Auslösung der Sicherheitseinrichtung führende Kollision simuliert.

4. Prüfverfahren nach Anspruch 1, dadurch gekennzeichnet, daß ein weiterer Prüfimpuls als Nichtauslöseimpuls ausgebildet ist, der eine vom Sensor (4) detektierte und nicht zur Auslösung der Sicherheitseinrichtung führende Kollision simuliert.

5. Prüfverfahren nach Anspruch 1, dadurch gekennzeichnet, daß als weiterer Prüfimpuls ein Impuls mit einer Impulsdauer von 0 ms erzeugt wird.

6. Prüfverfahren nach einem der vorangehenden Ansprüche, dadurch gekennzeichnet, daß beim Einschalten der Sicherheitseinrichtung die Steuereinheit (1) ein Startsignal der Überwachungseinheit (2) zuführt, wodurch diese Überwachungseinheit (2) zur Master-Einheit und die Steuereinheit (1) zur Slave-Einheit wird und die Überwachungseinheit (2) zur Durchführung der Verfahrensschritte e), f) und g) veranlaßt wird.

7. Schaltungsanordnung zur Durchführung des Prüfverfahrens nach einem der vorangehenden Ansprüche, dadurch gekennzeichnet, daß die Überwachungseinheit (2) eine Auswertelogik (2a) sowie eine Schaltung (2c) enthält, die die Prüfimpulse erzeugt und einen Zufallsgenerator zur Bestimmung der Reihenfolge der Prüfimpulse umfaßt.

8. Schaltungsanordnung nach Anspruch 7, dadurch gekennzeichnet, daß die Überwachungseinheit (2) eine Fenster-Watch-Dog-Schaltung (2b) umfaßt, die überwacht, ob zyklisch innerhalb eines Zeitfensters von der Steuereinheit (1) ein Beruhigungssignal (1b) gesendet wird.

## Claims

1. A method of testing a passive safety device in motor vehicles comprising
a) at least one collision sensor (4) which is connected to a signal processing circuit (5),
b) a detonator output stage for triggering at least one electrically actuatable triggering means for a restraint means in the safety device,
c) a control unit (1) which evaluates the signal produced by the signal processing circuit (5) in regard to the triggering criteria for the safety device,
d) a monitoring unit (2) which produces a test pulse after the safety device has been switched on, whereby
e) the test pulse is supplied to the signal processing circuit (5) for the sensor (4),
f) the control unit (1) produces an assessment result based on the test pulse and supplies it to the monitoring unit (2) and
g) a comparison of the assessment result with the generated test pulse is effected by the monitoring unit (2) and a fault condition is established in the event of deviations,
characterised by the following features:
k1) the monitoring unit (2) produces a series of at least two mutually differing test pulses,
k2) the series of test pulses produced by the monitoring unit (2) is supplied sequentially to the signal processing circuit (5) for the sensor (4) and a series of assessment results derived from the series of test pulses is sent from the control unit (1) to the monitoring unit (2),
k3) the monitoring unit (2) compares the series of assessment results with the series of generated test pulses, and enablement or blocking of the detonator output stage is effected in dependence on the result of the comparison.

2. A method of testing in accordance with Claim 1, characterised in that the sequence of individual test pulses within the series is produced randomly.

3. A method of testing in accordance with Claim 1, characterised in that at least one test pulse is in the form of a triggering pulse which simulates a collision detected by the sensor (4) that would lead to the triggering of the safety device.

4. A method of testing in accordance with Claim 1, characterised in that a further test pulse is in the form of a non-triggering pulse which simulates a collision detected by the sensor (4) that would not lead to the triggering of the safety device.

5. A method of testing in accordance with Claim 1, characterised in that a pulse having a pulse duration of 0 msecs is produced as a further test pulse.

6. A method of testing in accordance with any of the preceding Claims, characterised in that the control unit (1) supplies a start signal to the monitoring unit (2) when the safety device is switched on, whereby this monitoring unit (2) becomes a master unit and the control unit (1) becomes a slave unit, and the monitoring unit (2) is then caused to carry out the method steps e), f) and g).

7. A circuit arrangement for carrying out the method of testing in accordance with any of the preceding Claims, characterised in that the monitoring unit (2) includes an evaluating logic (2a) and a circuit (2c) which produces the test pulses and comprises a random number generator for determining the sequence of test pulses.

8. A circuit arrangement in accordance with Claim 7, characterised in that the monitoring unit (2) comprises a window-watch-dog circuit (2b) which monitors whether a calming signal (1b) is being transmitted cyclically by the control unit (1) within a time window.

## Revendications

1. Procédé de test pour un dispositif de sécurité passif dans des véhicules automobiles, constitué par
a) au moins un détecteur de collision (4), qui est raccordé à un circuit (5) de traitement de signaux,
b) un étage final d'amorçage pour déclencher au moins un moyen, pouvant être actionné électriquement, de déclenchement d'un moyen de retenue du dispositif de sécurité,
c) une unité de commande (1), qui exécute une évaluation des signaux produits par le circuit (5) de traitement des signaux, en ce qui concerne les critères de déclenchement pour le dispositif de sécurité,
d) une unité de contrôle (2) qui, après le branchement du dispositif de sécurité, produit une impulsion de test,
et dans lequel
e) l'impulsion de test est envoyée au circuit (5) de traitement de signaux du capteur (4),
f) l'unité de commande (1) produit, sur la base de l'impulsion de test un résultat d'évaluation, qui est envoyé à l'unité de contrôle (2), et
g) une comparaison du résultat d'évaluation à l'impulsion de test produite est réalisée par l'unité de contrôle (2) et dans le cas d'écarts, une erreur est identifiée,
caractérisé par les caractéristiques suivantes :
k1) l'unité de contrôle (2) produit une série d'au moins deux impulsions de test, qui diffèrent l'une de l'autre,
k2) la suite d'impulsions de test, produite par l'unité de contrôle, est envoyée séquentiellement au circuit (5) de traitement de signaux du capteur (4) et une suite de résultats d'évaluation, dérivée de la suite d'impulsions de test, est envoyée par l'unité de commande (1) à l'unité de contrôle (2),
k3) l'unité de contrôle (2) compare la suite de résultats d'évaluation à la suite d'impulsions de test produites, et une libération et un blocage de l'étage final d'amorçage s'effectuent en fonction du résultat de comparaison.

2. Procédé de test selon la revendication 1, caractérisé en ce qu'en ce qui concerne la série des différentes impulsions de test, ces dernières sont produites d'une manière aléatoire à l'intérieur de la suite.

3. Procédé de test selon la revendication 1, caractérisé en ce qu'au moins une impulsion de test est agencée sous la forme d'une impulsion de déclenchement, qui simule une collision qui est détectée par le capteur (4) et aboutit au déclenchement du dispositif de sécurité.

4. Procédé de test selon la revendication 1, caractérisé en ce qu'une autre impulsion de test est agencée en tant qu'impulsion de non-déclenchement, qui simule une condition qui est détectée par le détecteur (4) et ne conduit pas au déclenchement du dispositif de sécurité.

5. Procédé de test selon la revendication 1, caractérisé en ce qu'une impulsion ayant une durée de 0 ms est produite en tant qu'autre impulsion de test.

6. Procédé de test selon l'une des revendications précédentes, caractérisé en ce que lors du branchement du dispositif de sécurité, l'unité de commande (1) envoie un signal de démarrage à l'unité de contrôle (2), ce qui a pour effet que cette unité de contrôle (2) devient l'unité maître et que l'unité de commande (1) devient l'unité esclave, et l'unité de contrôle (2) est déclenchée pour l'exécution des étapes opératoires e), f) et g).

7. Montage pour la mise en oeuvre du procédé selon l'une des revendications précédentes, caractérisé en ce que l'unité de contrôle (2) contient une logique d'exploitation (2a) ainsi qu'un circuit (2c), qui produit des impulsions de contrôle et comprend un générateur de signaux aléatoires servant à déterminer la suite des impulsions de contrôle.

8. Montage selon la revendication 7, caractérisé en ce que l'unité de contrôle (2) comprend un circuit chien de garde à fenêtre (2b), qui contrôle si un signal de mise au repos (1b) est émis cycliquement pendant une fenêtre temporelle par l'unité de commande (1).
